# EUROPEAN PATENT APPLICATION

(11) **EP 2 407 662 A1**
(43) Date of publication of application: **18.01.2012**
(21) Application number: 10007185.1
(22) Date of filing: 12.07.2010
(51) Int. Cl.: F02M 65/00, F02D 41/14, G01B 11/26, F02M 63/00

(54) **Arrangement for analyzing a fluid flow of an injection valve**

(71) Applicant: Continental Automotive GmbH, 30165 Hannover (DE)
(72) Inventor: Mannucci, Cristiano, 57124 Livorno (IT)

(57) **Abstract**

Arrangement for analyzing a fluid flow of an injection valve (20), comprising a holding unit to arrange the injection valve (20) in a given position, an actuating unit being designed to provide an actuation signal to actuate the injection valve (20) to release fluid through a fluid outlet (25) of the injection valve (20), a light emitting device (40), and a light detecting device (42) being operable to provide a light signal. The light emitting device (40) is operable and arranged to emit at least one light beam (44, 44a, 44b) or at least one light plane in the direction to the light detecting device (42) in such a manner that the light emitting device (40) and the light detecting device (42) interact as a light barrier. The light emitting device (40) and the light detecting device (42) are arranged such that fluid released from the fluid outlet (25) of the injection valve (20) interferes at least partially with the at least one light beam (44, 44a, 44b) or at least one light plane in an optical path between the light emitting device (40) and the light detecting device (42).

## Description

The invention relates to an arrangement for analyzing a fluid flow of an injection valve.

Injection valves are in wide spread use, in particular for internal combustion engines where they may be arranged in order to dose the fluid into an intake manifold of the internal combustion engine or directly into the combustion chamber of a cylinder of the internal combustion engine.

In order to enhance the combustion process in view of the creation of unwanted emissions, the respective injection valve may be suited to dose fluids under very high pressures. The pressures may be in case of a gasoline engine, for example the range of up to 200 bar or in the case of diesel engines in the range of up to more than 2,000 bar. The injection of fluids under such high pressures has to be carried out very precisely.

The object of the invention is to create an arrangement for analyzing a fluid flow of an injection valve which is simply to be carried out and manufactured and which allows a reliable analysis of the fluid flow of an injection process of the injection valve.

The objects are achieved by the features of the independent claim. Advantageous embodiments of the invention are given in the sub-claims.

The invention is distinguished by an arrangement for analyzing a fluid flow of an injection valve, comprising a holding unit being designed to arrange the injection valve in a given position, an actuating unit being designed to provide an actuation signal to actuate the injection valve to release fluid through a fluid outlet of the injection valve, a light emitting device, and a light detecting device being operable to provide a light signal. The light emitting device is operable and arranged to emit at least one light beam or at least one light plane in the direction to the light detecting device in such a manner that the light emitting device and the light detecting device interact as a light barrier. The light emitting device and the light detecting device are arranged such that fluid released from the fluid outlet of the injection valve interferes at least partially with the at least one light beam or at least one light plane in an optical path between the light emitting device and the light detecting device.

The advantage is that a fast detection and/or monitoring of the fluid flow is possible. Furthermore, a high precision of the measurement of the fluid flow is possible. Additionally, a fast detection of bouncing effects and further undesired characteristics, in particular malfunctions of the injection valve is possible. Consequently, the costs for monitoring the fluid flow may be low.

In an advantageous embodiment the arrangement is designed to provide a fluid signal depending on the light signal and being representative for the fluid flow characteristic of the injection valve. This has the advantage that a specific signal for the analysis of the fluid flow is available.

In a further advantageous embodiment the at least one light beam or the at least one light plane is perpendicular to a central axis of the direction of propagation of fluid being released through the fluid outlet. This has the advantage that a fast and precise analysis of the fluid flow in the direction of propagation of the released fluid is possible.

In a further advantageous embodiment the light emitting device is designed to generate at least two light beams or at least two light planes. This has the advantage that a detection of a temporal and spatial dependency of the fluid flow is possible.

In a further advantageous embodiment the light emitting device is designed to emit the at least two light beams or at least two light planes in at least two different substantially parallel planes. This has the advantage that an analysis of the spatial dependency of the velocity of the fluid flow is possible.

In a further advantageous embodiment the light emitting device comprises one light source being designed to successively emit the at least two light beams or at least two light planes. By this a generation of different light planes or light beams with a single light source is possible. Consequently, an analysis of the temporal and spatial dependency of the fluid flow may be carried out in a simple manner.

In a further advantageous embodiment the light emitting device comprises at least two different light sources being designed to emit the at least two light beams or light planes. By this a simple construction of the light emitting device is possible.

In a further advantageous embodiment the light emitting device is a laser device. By this a simply constructed light emitting device and a small beam width is possible. The costs of the light emitting device can be kept small.

Exemplary embodiments of the invention are explained in the following with the aid of schematic drawings. These are as follows:
- Figure 1: a longitudinal section through an injection valve,
- Figure 2: a first embodiment of an arrangement for analyzing a fluid flow of the injection valve,
- Figure 3: a second embodiment of the arrangement for analyzing the fluid flow of the injection valve, and
- Figure 4: a graph representing the course of the analysis of the fluid flow of the injection valve.

Elements of the same design and function that occur in different illustrations are identified by the same reference character.

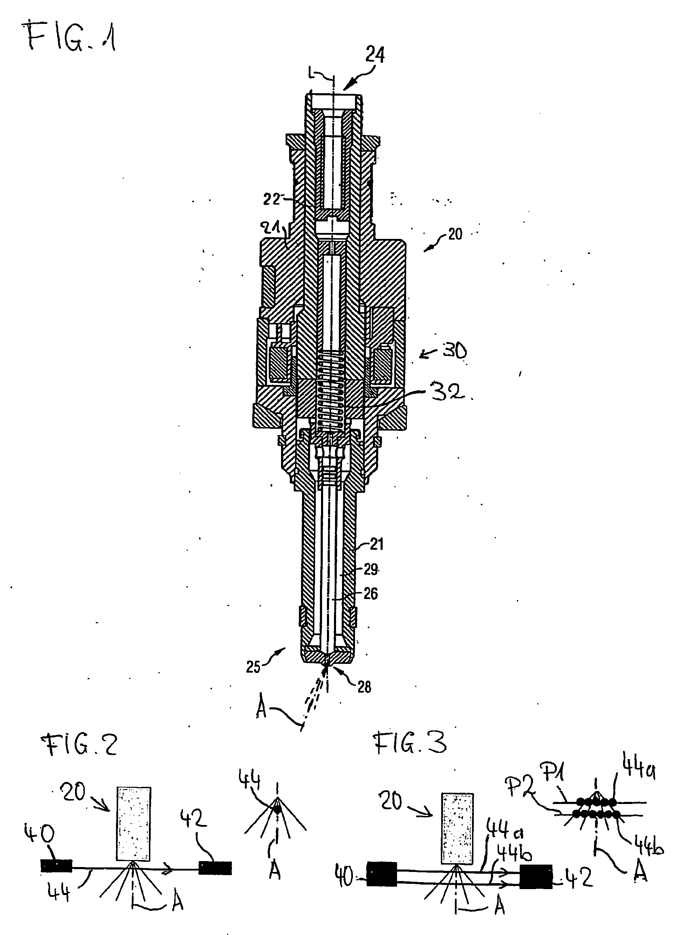

Figure 1 shows an injection valve 20. The injection valve 20 may be used for injecting fuel into a combustion chamber of an internal combustion engine. The injection valve 20 comprises a central longitudinal axis L and has a valve body 21. An inlet tube 22 is partially arranged inside the valve body 21. The inlet tube 22 is designed to be connected to a high-pressure fuel chamber of the internal combustion engine, the fuel is stored under high pressure, for example, under the pressure of about 200 bar in the case of a gasoline engine or of more than 2000 bar in the case of a diesel engine. The inlet tube 22 comprises a fluid inlet 24. Furthermore, the injection valve 20 has a fluid outlet 25.

The injection valve 20 comprises a valve needle 26 taken in a cavity 29 of the valve body 21. On a free end of the injection valve 20 an injection nozzle 28 is formed which is closed or opened depending on the position of the valve needle 26 due to an axial movement of the valve needle 26. In a closing position of the valve needle 26 a fluid flow through the injection nozzle 28 is prevented. In an opening position fluid can flow through the injection nozzle 28 into a combustion chamber of the internal combustion engine. The injection nozzle 28 may be for example an injection hole, but it may also be of some other type suitable for dosing fluid.

The injection valve 20 is provided with an actuator 30, which is preferably an electromagnetic drive. The actuator 30 may, however, also comprise another type of drive. The actuator 30 may be, for example, a piezoelectric actuator. If the actuator 30 is energized, this results in an actuating force acting on the valve needle 26. The actuating force acts against the mechanical force obtained from a spring 32 which is arranged inside the inlet tube 22 and which is coupled to the valve needle 26. By appropriately energizing the actuator 30, the valve needle 26 may be moved away from its closing position which results in a fluid flow through the injection nozzle 28 in direction of a central axis A. In the shown embodiment the central axis A of the direction of propagation of the fluid is different from the central longitudinal axis L of the injection valve 20.

Figures 2 and 3 show embodiments of arrangements for analyzing the fluid flow of the injection valve 20. The arrangement comprises a holding unit which may hold the injection valve 20 in a given position. Furthermore, the arrangement comprises an actuating unit which may provide an actuation signal to actuate the injection valve 20. Additionally, the arrangement comprises a light emitting device 40 and a light detecting device 42. The light emitting device 40 and the light detecting device 42 are preferably arranged near the fluid outlet 25 of the injection valve 20. Preferably, the light emitting device 40 is a laser device.

The light emitting device 40 of Figure 2 is emitting a light beam 44 in the direction to the light detecting device 42 in a manner that the light emitting device 40 and the light detecting device 42 interact as a light barrier. In the shown embodiment the light beam 44 is a single light beam. In a further embodiment the light emitting device 40 may also emit a light plane. This may be carried out by various optical devices. Such an optical device may be a rotatable mirror which may deflect the light beam 44 to form the desired light plane. Preferably, the light beam 44 or the light plane is perpendicular to the central axis A of the direction of propagation of the released fluid.

The embodiment of the arrangement for analyzing the fluid flow of the injection valve 20 of Figure 3 comprises the light emitting device 40 with a plurality of light sources. The light sources of the light emitting device 40 emit the light beams 44a, 44b. The light beams 44a, 44b are detected by the light detecting device 42. The light emitting device 40 and the light detecting device 42 interact as a light barrier. The light beams 44a are arranged in a first plane P1, and the light beams 44b are arranged in a second plane P2. In the shown embodiment, the planes P1, P2 are arranged parallel. However, in further embodiments the planes P1, P2 may be arranged in a further manner, which is appropriate for analyzing the fluid flow. In the embodiment of Figure 3 the light beams 44a, 44b are single light beams. Each of the light beams 44a, 44b may be generated by an individual light source of the light emitting device 40. In further embodiments, the light emitting device 40 may comprise optical devices, in particular beam splitters. These optical devices allow to generate a high number of light beams 44a, 44b by a small number of light sources of the light emitting device 40.

The light beams 44a of plane P1 and the light beams 44b of plane P2 each form a light grid. In a further embodiment the light emitting device 40 may also emit light planes, which are preferably arranged in the planes P1, P2. This may be realized by rotatable mirrors which may deflect the light beams 44a, 44b to form the desired light planes.

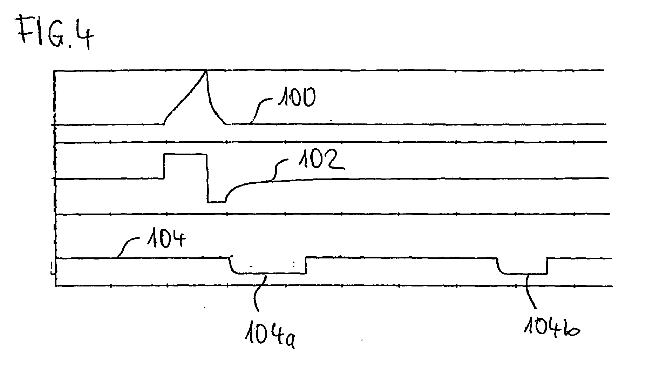

Figure 4 shows a time-dependent course of signals during the analysis of the fluid flow of the injection valve 20 with a current signal 100 and a voltage signal 102 of the actuator 30, and a fluid signal 104.

In the following, the analysis of the fluid flow of the injection valve 20 will be described in detail:
The injection valve 20 is actuated by energizing the actuator 30 with an appropriate electric signal (represented by the current signal 100 and the voltage signal 102 in Figure 4). If the energizing of the actuator 30 is appropriate, the valve needle 26 may move away from its closing position, so that fluid is released through the injection nozzle 28 into the direction of the central axis A.

The released fluid interferes with the light beam 44 or the plurality of light beams 44a, 44b or the light planes in an optical path between the light emitting device 40 and the light detecting device 42 (Figures 2, 3). The light beam 44 or the plurality of light beams 44a, 44b or the light planes may be detected by the light detecting device 42. The light detecting device 42 provides a light signal. The fluid signal 104 depends on the light signal of the light detecting device 42. In particular, the fluid signal 104 is representative for the time-dependency of the fluid flow of the injection valve 20. By this the fluid flow of the injection valve 20 may be analyzed and undesired functions of the injection valve 20 may be detected. As an example, Figure 4 shows a first section 104a of the fluid signal 104 immediately after the actuation of the actuator 30 which represents a desired single injection of fluid. A second section 104b of the fluid signal 104 shows that a second fluid flow through the fluid outlet 25 occurs. In the shown example the second section 104b of the fluid signal 104 may be caused by a bouncing of the valve needle 26. This shows that an information about the performance of the injection valve 20 may be obtained in a simple manner. Furthermore, an analysis of the fluid flow of the injection valve 20 can be carried out very fast. By this, the time for the use of test benches which are installed to test the injection valves 20 can be kept small, and the test benches can be used for other test procedures.

If the light beam 44 or the light plane is emitted into a direction of a plane which is perpendicular to the central axis A of the direction of propagation of the released fluid very precise information about the propagation of the released fluid of the injection valve 20 is possible.

The use of a plurality of light beams 44a, 44b or light planes, in particular in different parallel planes P1, P2 (Figure 3) allows to analyze the angle-dependency and the velocity of the fluid flow as important information about the performance of the injection valve 20. In the case of bouncing of the valve needle 26 the analysis of the velocity and the angle-dependency of the fluid flow may allow to detect the causes of bouncing very fast and with a high reliability.

## Claims

1. Arrangement for analyzing a fluid flow of an injection valve (20), comprising
- a holding unit being designed to arrange the injection valve (20) in a given position,
- an actuating unit being designed to provide an actuation signal to actuate the injection valve (20) to release fluid through a fluid outlet (25) of the injection valve (20),
- a light emitting device (40), and
- a light detecting device (42) being operable to provide a light signal,
the light emitting device (40) being operable and arranged to emit at least one light beam (44, 44a, 44b) or at least one light plane in the direction to the light detecting device (42) in such a manner that the light emitting device (40) and the light detecting device (42) interact as a light barrier, the light emitting device (40) and the light detecting device (42) being arranged such that fluid released from the fluid outlet (25) of the injection valve (20) interferes at least partially with the at least one light beam (44, 44a, 44b) or at least one light plane in an optical path between the light emitting device (40) and the light detecting device (42).

2. Arrangement according to claim 1, wherein the arrangement is designed to provide a fluid signal (104) depending on the light signal and being representative for the fluid flow characteristic of the injection valve (20).

3. Arrangement according to claim 1 or 2, wherein the at least one light beam (44, 44a, 44b) or the at least one light plane is perpendicular to a central axis (A) of the direction of propagation of fluid being released through the fluid outlet (25).

4. Arrangement according to one of the preceding claims, wherein the light emitting device (40) is designed to generate at least two light beams (44a, 44b) or at least two light planes.

5. Arrangement according to claim 4, wherein the light emitting device (40) is designed to emit the at least two light beams (44a, 44b) or at least two light planes in at least two different substantially parallel planes (P1, P2).

6. Arrangement according to claim 4 or 5, wherein the light emitting device (40) comprises one light source being designed to successively emit the at least two light beams (44a, 44b) or at least two light planes.

7. Arrangement according to claim 4 or 5, wherein the light emitting device (40) comprises two different light sources being designed to emit the at least two light beams (44a, 44b) or at least two light planes.

8. Arrangement according to one of the preceding claims, wherein the light emitting device (40) is a laser device.
